# EUROPEAN PATENT SPECIFICATION

(11) **EP 4 067 170 B1**
(45) Date of publication and mention of the grant of the patent: **02.07.2025**
(21) Application number: 22166323.0
(22) Date of filing: 01.04.2022
(51) Int. Cl.: B60R 11/04, B60R 1/00, B60R 11/00

(54) **A MOTOR VEHICLE**
KRAFTFAHRZEUG
VÉHICULE À MOTEUR

(30) Priority: 01.04.2021 NL 2027899
(43) Date of publication of application: 05.10.2022
(73) Proprietor: DAF Trucks N.V., 5643 TW Eindhoven (NL)
(72) Inventor: DAUBIES, Tiber Jan, 5643 TW Eindhoven (NL)
(74) Representative: V.O.

(56) References cited:
- US-A1- 2009 102 217
- US-A1- 2011 242 941
- US-B2- 8 627 552

## Description

The invention relates to a motor vehicle, in particular a heavy goods vehicle, comprising an add-on part and a carrier part, the add-on part being attached to the carrier part, and a cable, a wiring harness or the like, the carrier part comprising a single receiving aperture for receiving the add-on part and the cable and both the two mutually opposite clip towers with the trim clips and for passing through the cable, the wiring harness or the like, wherein the add-on part comprises two mutually opposite clip towers onto each of which a trim clip is provided, each trim clip having a first side part and a second side part, with regard to the clip tower a trim clip is provided on the first side part of the trim clip being positioned opposite the second side part of the trim clip, wherein the single aperture is defined by two mutually opposite aperture engaging edges and by two mutually opposite aperture side edges, wherein the first side parts of the trim clips face each other, wherein one of the two mutually opposite engaging edges is engaged only by the second side part of the trim clip of one of the mutually opposite clip towers and wherein the other one of the two mutually opposite engaging edges is engaged only by the second side part of the trim clip of the other of the mutually opposite clip towers, wherein the one of the two mutually opposite aperture engaging edges is larger than the other one of the two mutually opposite aperture engaging edges.

It is known, e.g. from US2011/242941 A1, to mount an add-on part such as an interior components of motor vehicles, e.g. a dashboard component, to a carrier part, e.g. a dashboard, by using fixation clips, clicking or snapping means without the need for tools such as screwdrivers and screws. The add-on part comprises retention clips mounted on two mutually opposite clip towers. The carrier part comprises two receiving slots each for receiving a respective clip tower with its trim clip and an additional hole, also called a functional hole, for providing passage of the cable, the wiring harness or the like. By passing the cable, the wiring harness or the like through the functional hole and by pushing the clip towers into the receiving slots the add-on part is attached to the carrier part. Although such attachment is usually satisfactory clips require a certain minimum amount of space around the clips. In particular when attaching an add-on part on a carrier part in a location of a motor vehicle with a limited amount of space the attachment of an add-on part with two mutually opposite clip towers and a cable, a wiring harness or the like is difficult, while in some cases the space available does not allow sufficient room for the carrier part to be provided with both the functional hole for the cable, the wiring harness or the like and the receiving aperture, i.e. the two receiving slots, for the clip towers.

It is an object of the invention to provide a motor vehicle with an add-on part having two mutually opposite clip towers and a cable, a wiring harness or the like, and a carrier part which can be attached to each other in locations of limited space while still providing a robust attachment without the need for an addition functional hole.

According to the invention this object is at least partly achieved by providing a motor vehicle, in particular a heavy goods vehicle, comprising an add-on part and a carrier part, the add-on part being attached to the carrier part, and a cable, a wiring harness or the like, the carrier part comprising a single receiving aperture for receiving the add-on part and the cable and both the two mutually opposite clip towers with the trim clips and for passing through the cable, the wiring harness or the like, wherein the add-on part comprises two mutually opposite clip towers onto each of which a trim clip is provided, each trim clip having a first side part and a second side part, with regard to the clip tower a trim clip is provided on the first side part of the trim clip being positioned opposite the second side part of the trim clip, wherein the single aperture is defined by two mutually opposite aperture engaging edges and by two mutually opposite aperture side edges, wherein the first side parts of the trim clips face each other, wherein one of the two mutually opposite engaging edges is engaged only by the second side part of the trim clip of one of the mutually opposite clip towers and wherein the other one of the two mutually opposite engaging edges is engaged only by the second side part of the trim clip of the other of the mutually opposite clip towers, characterized in that the one of the two mutually opposite aperture engaging edges is larger than the other one of the two mutually opposite aperture engaging edges.

By using a single aperture for receiving both the two mutually opposite clip towers and for passing through the cable, the wiring harness or the like instead of the known two receiving slots and the additional functional hole the attachment of the add-on part to the carrier part only requires a limited foot print while still being able to provide a robust attachment. As a result of this, the material usage can be minimized by minimizing material overlap of the two components, i.e. the add-on part and the carrier part. The single aperture can be rectangular, trapezial or any other shape with two mutually opposite edges for providing engagement for the trim clips.

In the motor vehicle according to the invention the single aperture is defined by two mutually opposite aperture engaging edges and by two mutually opposite aperture side edges, wherein the first side parts of the trim clips face each other, wherein one of the two mutually opposite engaging edges is engaged only by the second side part of the trim clip of one of the mutually opposite clip towers and wherein the other one of the two mutually opposite engaging edges being engaged only by the second side part of the trim clip of the other of the mutually opposite clip towers. In this manner only one of the sides of the trim clips is used for engagement with one of the aperture engaging edge while still providing a robust attachment without the need for adapting the trim clips.

In the motor vehicle according to the invention the one of the two mutually opposite aperture engaging edges is larger than the other one of the two mutually opposite aperture engaging edges. In this manner the single aperture has a larger dimension at the side of the one of the two mutually opposite aperture engaging edges, which can provide sufficient room for passage of the cable, the wiring harness or the like. In an alternative embodiment sufficient room for passing through of the cable, the wiring harness or the like can be realized by one or two outwardly curved aperture side edges.

In a further embodiment of a motor vehicle according to the invention the add-on part comprises at least one rib positioned for engaging the first side part of one of the trim clips. In this manner the attachment force of the trim clips can be increased. In addition, the ribs prevent unwanted loosening of the add-on part from the carrier part in case the motor vehicle experiences larges forces, such as when driving over a very bumpy road.

In another embodiment of a motor vehicle according to the invention the add-on part comprises two mutually opposite flanges interconnecting end sides of the two mutually opposite clip towers. In this manner inwards bending of the clip towers during assembly and during use is prevented, providing a robust attachment over time.

In a further embodiment of a motor vehicle according to the invention the motor vehicle comprises a driver cabin having an A-pillar, the A-pillar comprising the carrier part. The invention is in particular advantageous when the add-on part is an electronic unit, such as an electronic blind spot object detection unit. An A-pillar of a driver cabin is nowadays more frequently used for attachment of components such as mirrors and electronic detection units, in particular an electronic blind spot object detection unit. Since the A-pillar has a relatively small width the present invention provides the possibility of attaching an add-on part, such as an electronic blind spot object detection unit, to a carrier part provided on the A-pillar in a robust manner. It is observed here that the invention is not limited to attachment of an add-on part to a carrier part of an A-pillar, but that the invention is also applicable to add-on parts attached to carrier parts provided on other parts of the vehicle, such as a B-pillar, a dashboard or a vehicle panel, and the like.

The invention will be further explained with reference to the Figures, in which a non-limiting exemplary embodiment of according to the invention is shown:
Fig. 1 schematically shows one of the two mutually opposite clip towers with a trim clip of an add-on part of a known motor vehicle;
Fig. 2 schematically shows a carrier part with two receiving slots and a functional hole of a known motor vehicle;
Fig. 3 schematically shows an embodiment of a carrier part of a motor vehicle according to the invention comprising a single aperture;
Fig. 4 schematically shows an embodiment of an add-on part of a motor vehicle according to the invention comprising two mutually opposite clip towers onto each of which a metallic trim clip is provided, two mutually opposite flanges interconnecting end sides of the two mutually opposite clip towers and a cable;
Fig. 5 schematically shows a further embodiment of an add-on part of a motor vehicle according to the invention comprising two ribs positioned for engaging the first side parts of the metallic trim clips;
Fig. 6 schematically shows an embodiment of an add-on part attached to a carrier part according to the invention; and
Figure 7 schematically shows a heavy goods vehicle with an electronic blind spot object detection unit attached to a carrier part of an A-pillar according to the invention.

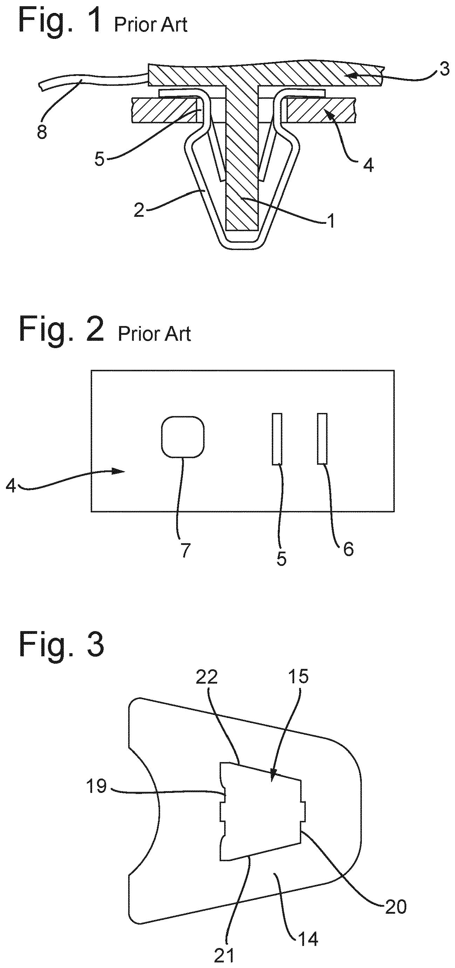

First a known attachment of an add-on part to a carrier part will be described in short, with regard to Figures 1 and 2. In Figs. 1 and 2 one of two mutually opposite clip towers 1 with a trim clip 2 of an add-on part 3 and a carrier part 4 with two receiving slots 5, 6 and a functional hole 7 of a known motor vehicle are shown, respectively. The add-on part 3 comprises two of such clip towers 1 and a cable 8 for example for power supply or signal transmission. Please note that instead of a cable, the add-on part according to the invention can also be provided with a wiring harness or the like. Attachment of the add-on part 3 to the carrier part 4 is accomplished by pushing the clip towers 1 in the two receiving slots 5, 6 and by passing the cable 8 through the functional hole 7.

The invention will be explained with reference to exemplary embodiments schematically shown in Figures 3 to 7. By way of example the invention will be described with regard to metallic trim clips, but it will be understood that trim clips of other suitable materials, such as plastics, can also be used.

In Figure 3 an embodiment of a carrier part 14 comprising a single aperture 15 for receiving both the two mutually opposite clip towers 11, 12 with their metallic trim clips 16, 17 and the cable 18 of the add-on part 13 is shown schematically.

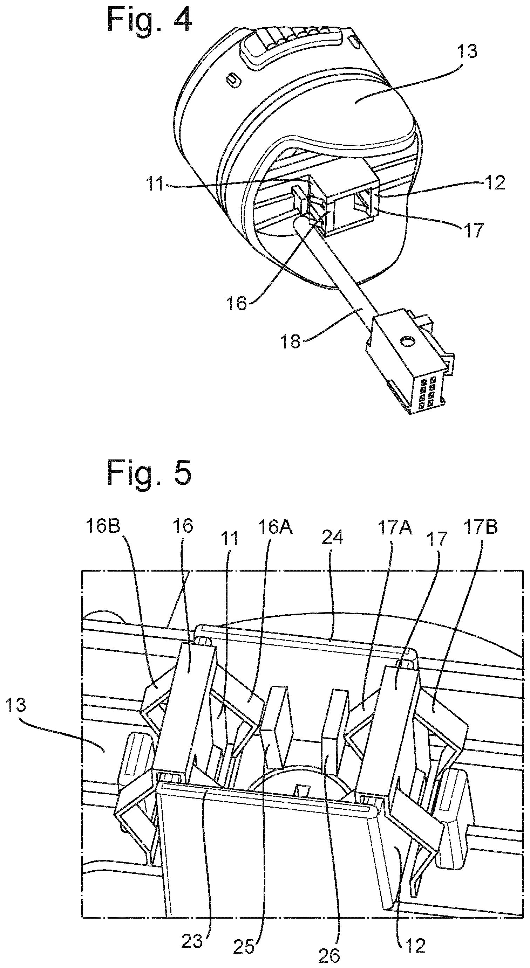

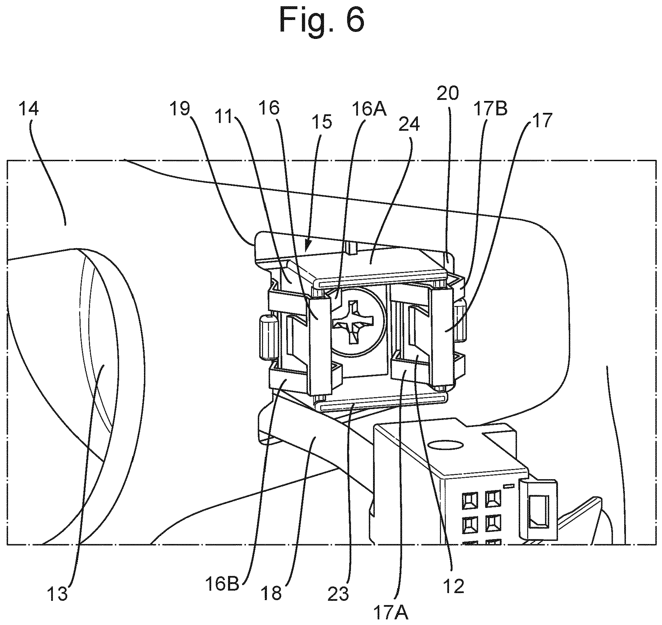

As indicated in Figure 3 the single aperture 15 is defined by two mutually opposite aperture engaging edges 19, 20 and by two mutually opposite aperture side edges 21, 22. As e.g. shown in Figures 5 and 6 first side parts 16A, 17A of the metallic trim clips 16, 17 face each other. In assembled state the engaging edge 19 is engaged only by the second side part 16B of the metallic trim clip 16 and other engaging edge 20 is engaged only by the second side part 17B of the metallic trim clip 17.

As indicated in e.g. Figure 3 the aperture engaging edge 19 is larger than the aperture engaging edge 20 so that sufficient space is provided for the cable 18 to pass through the single aperture 15 as is shown in Figure 6.

As shown in the embodiment of Figure 5 the add-on part 13 further comprises two mutually opposite flanges 23, 24 interconnecting end sides of the two mutually opposite clip towers 11, 12 to prevent inward bending of the clip towers 11, 12. In addition, in this embodiment the add-on part 13 comprises ribs 25, 26 positioned for engaging the first side parts 16A, 17A of the metallic trim clips 16, 17 to increase the clipping force.

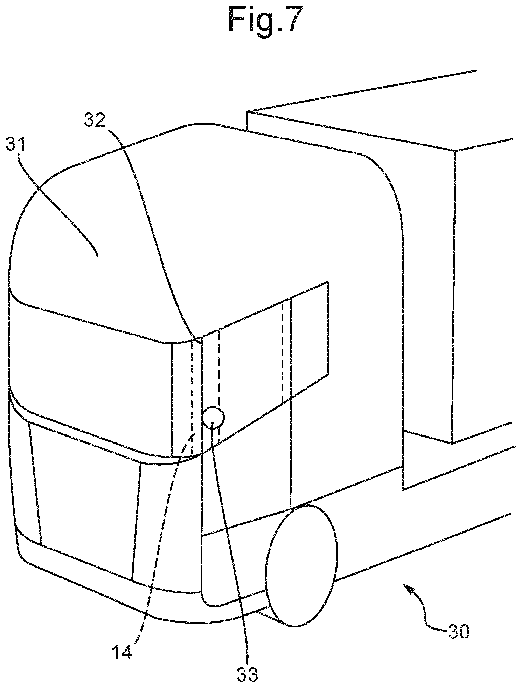

In Figure 7 an embodiment of a motor vehicle, in this embodiment a heavy goods vehicle 30 according to the invention is shown comprising a driver cabin 31 with an A-pillar 32. The A-pillar comprising a carrier part 14 to which an electronic unit, in this example an electronic blind spot object detection unit 33 as add-on part is attached. It will be clear that the invention is not restricted to heavy goods vehicles but is applicable to all kinds of vehicles.

## Claims

1. A motor vehicle (30), in particular a heavy goods vehicle (30), comprising an add-on part (13) and a carrier part (14), the add-on part (13) being attached to the carrier part (14), and a cable (18), a wiring harness or the like, the carrier part (14) comprising a single receiving aperture (15) for receiving the add-on part (13) and the cable (18) and both the two mutually opposite clip towers (11, 12) with the trim clips (16, 17) and for passing through the cable (18), the wiring harness or the like, **wherein** the add-on part (13) comprises two mutually opposite clip towers (11, 12) onto each of which a trim clip (16, 17) is provided, each trim clip (16, 17) having a first side part (16A, 17A) and a second side part (16B, 17B), with regard to the clip tower a trim clip (16, 17) is provided on the first side part (16A, 17A) of the trim clip (16, 17) being positioned opposite the second side part (16B, 17B) of the trim clip (16, 17), wherein the single aperture (15) is defined by two mutually opposite aperture engaging edges (19, 20) and by two mutually opposite aperture side edges (21, 22), wherein the first side parts (16A, 17A) of the trim clips (16, 17) face each other, wherein one of the two mutually opposite engaging edges (19, 20) is engaged only by the second side part (16B, 17B) of the trim clip (16, 17) of one of the mutually opposite clip towers (11, 12) and wherein the other one of the two mutually opposite engaging edges (19, 20) is engaged only by the second side part (16B, 17B) of the trim clip (16, 17) of the other of the mutually opposite clip towers (11, 12), **characterized in that** the one of the two mutually opposite aperture engaging edges (19, 20) is larger than the other one of the two mutually opposite aperture engaging edges (19, 20).

2. A motor vehicle (30) according to claim 1, wherein the add-on part (13) comprises at least one rib (25, 26) positioned for engaging the first side part (16A, 17A) of one of the trim clips (16, 17).

3. A motor vehicle (30) according to claim 1 or 2, wherein the add-on part (13) comprises two mutually opposite flanges (23, 24) interconnecting end sides of the two mutually opposite clip towers (11, 12).

4. A motor vehicle (30) according to any one of the claims 1 to 3, wherein the motor vehicle (30) comprises a driver cabin (31) having an A-pillar (32), the A-pillar (32) comprising the carrier part (14).

5. A motor vehicle (30) according to claim 4, wherein the add-on part (13) is an electronic unit, such as an electronic blind spot object detection unit (33).

6. A motor vehicle (30) according to any one of the claim 1 to 5, wherein the trim clips (16, 17) are metallic trim clips.

## Patentansprüche

1. Kraftfahrzeug (30), insbesondere ein Lastkraftwagen (30), mit einem Anbauteil (13) und einem Trägerteil (14), wobei das Anbauteil (13) an dem Trägerteil (14) angebracht ist, und einem Kabel (18), einem Kabelbaum oder dergleichen, wobei das Trägerteil (14) eine einzige Aufnahmeöffnung (15) zum Aufnehmen des Anbauteils (13) und des Kabels (18) und der beiden einander entgegengesetzten Klammertürme (11, 12) mit den Besatzklammern (16, 17) für das Durchführen des Kabels (18), des Kabelbaums oder dergleichen aufweist, **wobei** das Anbauteil (13) zwei einander entgegengesetzte Klammertürme (11, 12) aufweist, auf welchen jeweils eine Besatzklammer (16, 17) bereitgestellt ist, wobei jede Besatzklammer (16, 17) ein erstes Seitenteil (16A, 17A) und ein zweites Seitenteil (16B, 17B) aufweist, in Bezug zu dem Klammerturm eine Besatzklammer (16, 17) an dem ersten Seitenteil (16A, 17A) der Besatzklammer (16, 17) bereitgestellt ist, das dem zweiten Seitenteil (16B, 17B) der Besatzklammer (16, 17) entgegengesetzt positioniert ist, wobei die einzige Öffnung (15) durch zwei einander entgegengesetzte Öffnungseingriffskanten (19, 20) und durch zwei einander entgegengesetzte Öffnungsseitenkanten (21, 22) definiert ist, wobei die ersten Seitenteile (16A, 17A) der Besatzklammern (16, 17) einander zugewandt sind, wobei in eine der zwei einander entgegengesetzten Eingriffskanten (19, 20) nur das zweite Seitenteil (16, 17B) der Besatzklammer (16, 17) eines der einander entgegengesetzten Klammertürme (11, 12) eingreift, und wobei in die andere der zwei einander entgegengesetzten Eingriffskanten (19, 20) nur das zweite Seitenteil (16B, 17B) der Besatzklammer (16, 17) des anderen der einander entgegengesetzten Klammertürme (11, 12) eingreift, **dadurch gekennzeichnet, dass** die eine der zwei einander entgegengesetzten Öffnungseingriffskanten (19, 20) größer als die andere der zwei einander entgegengesetzten Öffnungseingriffskanten (19, 20) ist.

2. Kraftfahrzeug (30) nach Anspruch 1, wobei das Anbauteil (13) mindestens eine Rippe (25, 26) aufweist, die zum Eingreifen in das erste Seitenteil (16A, 17A) einer der Besatzklammern (16, 17) positioniert ist.

3. Kraftfahrzeug (30) nach Anspruch 1 oder 2, wobei das Anbauteil (13) zwei einander entgegengesetzte Flansche (23, 24) aufweist, die Endseiten der zwei einander entgegengesetzten Klammertürme (11, 12) verbinden.

4. Kraftfahrzeug (30) nach einem der Ansprüche 1 bis 3, wobei das Kraftfahrzeug (30) eine Fahrerkabine (31) aufweist, die eine A-Säule (32) aufweist, wobei die A-Säule (32) das Trägerteil (14) umfasst.

5. Kraftfahrzeug (30) nach Anspruch 4, wobei das Anbauteil (13) eine elektronische Einheit, wie eine elektronische Erfassungseinheit (33) für toten Winkel ist.

6. Kraftfahrzeug (30) nach einem der Ansprüche 1 bis 5, wobei die Besatzklammern (16, 17) metallische Besatzklammern sind.

## Revendications

1. Véhicule à moteur (30), en particulier véhicule poids lourd (30), comprenant une pièce rapportée (13) et une pièce de support (14), la pièce rapportée (13) étant fixée à la pièce de support (14), et un câble (18), un faisceau de câblage ou analogue, la pièce de support (14) comprenant une ouverture de réception unique (15) pour recevoir la pièce rapportée (13) et le câble (18) et les deux tours d'attache mutuellement opposées (11, 12) avec les attaches de garniture (16, 17), et pour un passage traversant du câble (18), du faisceau de câblage ou analogue, dans lequel la pièce rapportée (13) comprend deux tours d'attache mutuellement opposées (11, 12) sur chacune desquelles est prévue une attache de garniture (16, 17), chaque attache de garniture (16, 17) présentant une première partie latérale (16A, 17A) et une seconde partie latérale (16B, 17B), par rapport à la tour d'attache, une attache de garniture (16, 17) est prévue sur la première partie latérale (16A, 17A) de l'attache de garniture (16, 17) étant positionnée à l'opposé de la seconde partie latérale (16B, 17B) de l'attache de garniture (16, 17), dans lequel l'ouverture unique (15) est définie par deux bords de mise en prise d'ouverture mutuellement opposés (19, 20) et par deux bords latéraux d'ouverture mutuellement opposés (21, 22), dans lequel les premières parties latérales (16A, 17A) des attaches de garniture (16, 17) se font face, dans lequel un certain des deux bords de mise en prise mutuellement opposés (19, 20) est mis en prise uniquement par la seconde partie latérale (16B, 17B) de l'attache de garniture (16, 17) d'une certaine des tours d'attache mutuellement opposées (11, 12) et dans lequel l'autre des deux bords de mise en prise mutuellement opposés (19, 20) est mis en prise uniquement par la seconde partie latérale (16B, 17B) de l'attache de garniture (16, 17) de l'autre des tours d'attache mutuellement opposées (11, 12), **caractérisé en ce que** le certain des deux bords de mise en prise d'ouverture mutuellement opposés (19, 20) est plus grand que l'autre des deux bords de mise en prise d'ouverture mutuellement opposés (19, 20).

2. Véhicule à moteur (30) selon la revendication 1, dans lequel la pièce rapportée (13) comprend au moins une nervure (25, 26) positionnée pour venir en prise avec la première partie latérale (16A, 17A) d'une certaine des attaches de garniture (16, 17).

3. Véhicule à moteur (30) selon la revendication 1 ou 2, dans lequel la pièce rapportée (13) comprend deux brides mutuellement opposées (23, 24) interconnectant des côtés d'extrémité des deux tours d'attache mutuellement opposées (11, 12).

4. Véhicule à moteur (30) selon l'une quelconque des revendications 1 à 3, dans lequel le véhicule à moteur (30) comprend une cabine de conducteur (31) présentant un montant A (32), le montant A (32) comprenant la pièce de support (14).

5. Véhicule à moteur (30) selon la revendication 4, dans lequel la pièce rapportée (13) est une unité électronique, telle qu'une unité de détection d'objet d'angle mort électronique (33).

6. Véhicule à moteur (30) selon l'une quelconque des revendications 1 à 5, dans lequel les attaches de garniture (16, 17) sont des attaches de garniture métalliques.
